# EUROPÄISCHE PATENTANMELDUNG

(11) **EP 1 059 580 A1**
(43) Veröffentlichungstag der Anmeldung: **13.12.2000**
(21) Anmeldenummer: 99111344.0
(22) Anmeldetag: 10.06.1999
(51) Int. Cl.: G06F 9/302, G06F 7/48

(54) **Programmgesteuerte Einheit**

(71) Anmelder: SIEMENS AKTIENGESELLSCHAFT, 80333 München (DE)
(72) Erfinder: Siemers, Christian, Dr., 31139 Hildesheim (DE)

(57) **Zusammenfassung**

Die programmgesteuerte Einheit zeichnet sich dadurch aus, daß Befehle, die unterschiedlichen Befehlsgruppen angehören, in unterschiedlichen Komponenten der programmgesteuerten Einheit ausgeführt werden, und daß aufeinanderfolgende Befehle einer Befehlsfolge, die in unterschiedlichen Komponenten auszuführen sind, gleichzeitig ausgeführt werden und/oder daß die programmgesteuerte Einheit die aus dem Programm- und/oder Datenspeicher gelesenen Befehle neben der sequentiellen Abarbeitung derselben in mehrere Befehle umfassende Makrobefehle umsetzt und intern speichert.

## Beschreibung

Die vorliegende Erfindung betrifft eine Vorrichtung gemäß dem Oberbegriff der Patentansprüche 1 und 2, d.h. eine programmgesteuerte Einheit, welche in einem Programm- und/oder Datenspeicher gespeicherte Befehle holt und sequentiell abarbeitet.

Programmgesteuerte Einheiten dieser Art sind beispielsweise nach dem bekannten Von-Neumann-Prinzip oder dem Harvard-Prinzip arbeitende Mikroprozessoren, Mikrocontroller etc.

Besonders schnell arbeitende programmgesteuerte Einheiten dieser Art sind die sogenannten RISC-Prozessoren. Diese weisen einen reduzierten Befehlssatz auf und ermöglichen es dadurch, die Mikroprogramme, unter Verwendung welcher die abzuarbeitenden Befehle üblicherweise decodiert und ausgeführt werden, durch fest verdrahtete Hardware zu ersetzen. Dies wiederum gestattet es, besonders schnell und effizient arbeitende Befehls-Pipelines und Befehls-Ausführungseinheiten zu realisieren, so daß im Mittel bis zu ein Befehl pro Prozessortakt zur Ausführung gebracht werden kann. Wegen der nach wie vor vorhandenen Abarbeitungs- und Ergebnissequentialität kann mit RISC-Prozessoren jedoch nicht mehr als ein Befehl pro Prozessortakt ausgeführt werden.

Um die Arbeitsgeschwindigkeit von programmgesteuerten Einheiten weiter zu steigern, muß deren Taktfrequenz erhöht werden und/oder müssen wie bei den sogenannten superskalaren Prozessoren in mehrfach vorgesehenen Prozessor-Komponenten gleichzeitig mehrere Befehle ausgeführt werden. Dies ist jedoch - sofern es technisch überhaupt möglich ist - mit einem immensen Mehraufwand verbunden.

Der vorliegenden Erfindung liegt daher die Aufgabe zugrunde, die programmgesteuerte Einheit gemäß den Oberbegriffen der Patentansprüche 1 und 2 derart weiterzubilden, daß sich deren Arbeitsgeschwindigkeit mit geringem Aufwand deutlich steigern läßt.

Diese Aufgabe wird erfindungsgemäß durch das im kennzeichnenden Teil des Patentanspruchs 1 beanspruchte Merkmal und/oder durch das im kennzeichnenden Teil des Patentanspruchs 2 beanspruchte Merkmal gelöst.

Demnach ist vorgesehen,
- daß Befehle, die unterschiedlichen Befehlsgruppen angehören, in unterschiedlichen Komponenten der programmgesteuerten Einheit ausgeführt werden, und daß aufeinanderfolgende Befehle einer Befehlsfolge, die in unterschiedlichen Komponenten auszuführen sind, gleichzeitig ausgeführt werden (kennzeichnender Teil des Patentanspruchs 1) bzw.
- daß die programmgesteuerte Einheit die aus dem Programm-und/oder Datenspeicher gelesenen Befehle neben der sequentiellen Abarbeitung derselben in mehrere Befehle umfassende Makrobefehle umsetzt und intern speichert (kennzeichnender Teil des Patentanspruchs 2).

Damit können in einer programmgesteuerten Einheit, die zum sequentiellen Holen und Ausführen von Befehlen ausgelegt ist, also in einer relativ einfach aufgebauten programmgesteuerten Einheit, mit minimalem Zusatzaufwand (insbesondere ohne mehrfaches Vorsehen der zum Holen, Decodieren und/oder Ausführen der Befehle benötigten Komponenten der programmgesteuerten Einheit) mehrere Befehle gleichzeitig ausgeführt werden.

Vorteilhafte Weiterbildungen der Erfindung sind den Unteransprüchen, der folgenden Beschreibung, und den Figuren entnehmbar.

Die Erfindung wird nachfolgend anhand eines Ausführungsbeispiels unter Bezugnahme auf die Figuren näher beschrieben. Es zeigen
- Figur 1: eine schematische Darstellung des Aufbaus der arithmetisch-logischen Einheit der vorliegend betrachteten programmgesteuerten Einheit,
- Figur 2: das Format, in welchem durch die vorliegend betrachtete programmgesteuerte Einheit generierte Makrobefehle gespeichert werden,
- Figur 3: eine schematische Darstellung des Aufbaus der vorliegend betrachteten programmgesteuerten Einheit,
- Figur 4: eine schematische Darstellung des Aufbaus einer herkömmlichen programmgesteuerten Einheit, und
- Figur 5: eine schematische Darstellung des Aufbaus der arithmetisch-logischen Einheit einer herkömmlichen programmgesteuerten Einheit.

Bei der nachfolgend näher beschriebenen programmgesteuerten Einheit handelt es sich um einen sogenannten RISC-Prozessor.

Eine programmgesteuerte Einheit kann als RISC-Prozessor betrachtet werden, wenn sie mindestens 5 der nachfolgenden 8 Kriterien erfüllt, nämlich
1) Anzahl der Maschinenbefehle ≤ 150
2) Anzahl der Adressierungsmodi ≤ 4
3) Anzahl der Befehlsformate ≤ 4
4) Anzahl der allgemeinen CPU-Register ≥ 32
5) Ausführung aller oder der meisten Maschinenbefehle in einem Zyklus.
6) Speicherzugriff nur über Load/Store-Befehle
7) Festverdrahtete Steuerung, und
8) Unterstützung höherer Programmiersprachen.

Es sei jedoch bereits an dieser Stelle darauf hingewiesen, daß sich die Erfindung auch bei anderen Mikroprozessoren, Mikrocontrollern etc. anwenden läßt, wobei die positiven Effekte der Erfindung besonders ausgeprägt sind, wenn die nachfolgend beschriebenen Modifikationen an einer programmgesteuerten Einheit vorgenommen werden, die die von ihr auszuführenden Befehle sequentiell (aus einem Programm- und/oder Datenspeicher) holt und abarbeitet.

Von den aufgelisteten RISC-Prozessor-Kriterien ist insbesondere der Punkt 5 nicht ganz problemlos realisierbar. Hierzu muß zumindest bei Prozessoren, deren maximaler Takt in etwa dem technisch möglichen entspricht, ein sogenanntes Phasenpipelining eingeführt werden.

Beim Phasenpipelining werden das Holen und die Abarbeitung der auszuführenden Befehle in mehrere Phasen unterteilt. Ein abzuarbeitender Befehl muß aufeinanderfolgend alle Phasen durchlaufen, wobei jedoch die die betreffenden Phasen realisierenden Teileinheiten des Prozessors parallel an verschiedenen Befehlen arbeiten (sobald ein Befehl n eine Phase x durchlaufen hat und in die nächste Phase x+1 eintritt, kann schon der nächste Befehl n+1 in die Phase x eintreten).

Die Anzahl und die Definition der einzelnen Phasen kann variieren. Im betrachteten Beispiel sind das Holen und die Abarbeitung der auszuführenden Befehle in vier Phasen, nämlich
1) eine Befehlshol-Phase (Instruction-Fetch- bzw. IF-Phase),
2) eine Decodier- und Operandenhol-Phase (Decode/Operand-Load- bzw. DL-Phase),
3) eine Befehlsausführungs- und Speicherzugriffs-Phase (Execute/Memory-Access- bzw. EX/MEM-Phase), und
4) eine Zurückschreib-Phase (Write-Back- bzw. WB-Phase)
unterteilt.

Es sei bereits an dieser Stelle darauf hingewiesen, daß auch beliebig viel mehr und/oder anders definierte Phasen vorgesehen werden können. Hierzu und bezüglich weiterführender Informationen zur RISC-Architektur wird auf Hennessy, J.L., Patterson, D.A.: "Computer Architecture: A Quantitative Approach", Second Edition, San Franzisco, Morgan Kaufmann Publishers, 1996, verwiesen.

Die erste der genannten Phasen, d.h. die IF-Phase dient dem sequentiellen Laden der auszuführenden Befehle aus einem Programm- und/oder Datenspeicher. Um das Ziel der RISC-Architektur, einen Befehl pro Takt auszuführen, erreichen zu können, muß pro Takt ein Befehl (einschließlich aller Operanden) in den Prozessor geladen werden. Die Maßnahmen, die erforderlich sind, um dies zu bewerkstelligen (Vorsehen eines ausreichend breiten Datenbusses, geeignete Codierung der Befehle, Verbreiterung des Datenbusses für Codespeicher, Vorsehen interner Register für ergänzende Datenbits etc.) sind bekannt und bedürfen keiner näheren Erläuterung.

In der zweiten der genannten Phasen, d.h. in der DL-Phase wird die im vorhergehenden Takt (in der IF-Phase) in den Prozessor geholte Instruktion zunächst decodiert, um alle Informationen zur weiteren Ausführung zu erhalten. Anschließend werden interne (Eingangs-)Register, auf die bei der Befehlsausführung zugegriffen wird, mit den zur bestimmungsgemäßen Befehlsausführung erforderlichen Daten beschrieben.

In der dritten der genannten Phasen, d.h. der EX/MEM-Phase wird die durch den Befehl repräsentierte Operation einschließlich gegebenenfalls erforderlicher Speicherzugriffe ausgeführt. Während die ersten beiden Phasen - von den Unterschieden im Laden der Operanden einmal abgesehen - für alle Befehle nahezu identisch verlaufen, verläuft die EX/MEM-Phase für verschiedene Befehle (für verschiedene Gruppen von Befehlen) unterschiedlich.

In der vierten (letzten) der genannten Phasen, d.h. der WB-Phase wird das Ergebnis der in der EX/MEM-Phase durchgeführten Operation in den jeweils definierten Ergebnisspeicher geschrieben. Mit dem Durchlaufen dieser letzten Phase ist die Befehlsabarbeitung abgeschlossen.

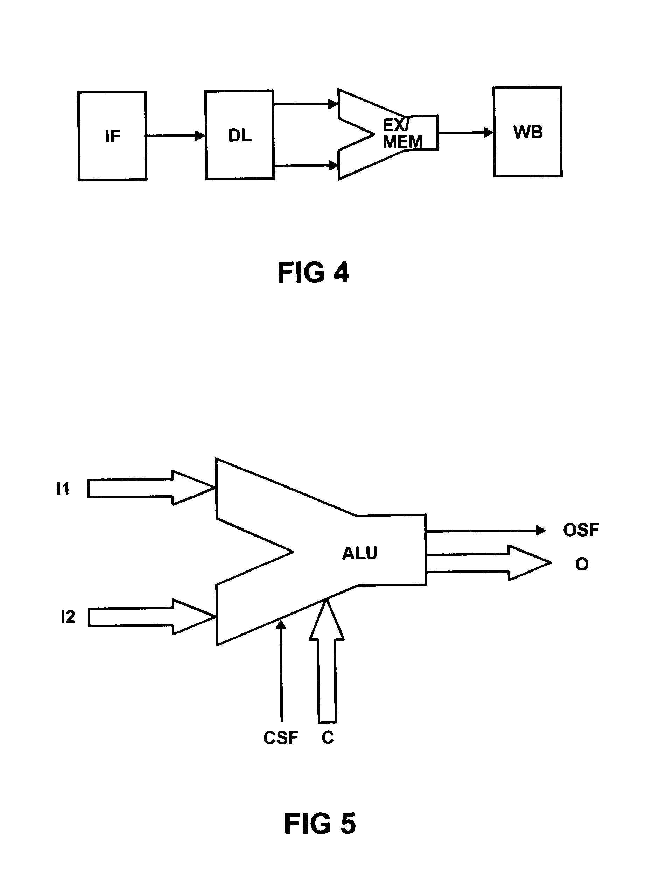

Ein wie beschrieben arbeitender Prozessor verfügt für die Durchführung der einzelnen Phasen des Holens und Abarbeitens von Befehlen über separate Teileinheiten. Der prinzipielle Aufbau eines solchen Prozessors ist schematisch in Figur 4 dargestellt. Die genannten Teileinheiten sind mit den Bezugszeichen IF (Teileinheit zur Durchführung der IF-Phase), DL (Teileinheit zur Durchführung der DL-Phase), EX/MEM (zur Durchführung der EX/MEM-Phase), und WB (zur Durchführung der WB-Phase) bezeichnet. Die EX/MEM-Teileinheit enthält als wesentlichen Bestandteil die arithmetisch/logische Einheit (ALU) der programmgesteuerten Einheit.

Der vorliegend betrachtete Prozessor ist - abweichend von herkömmlichen Prozessoren der vorliegend betrachteten Art, aber unter Beibehaltung des in Figur 4 gezeigten prinzipiellen Aufbaus - so aufgebaut, daß bestimmte Befehle, gleichzeitig (parallel) ausgeführt werden können. Insbesondere können Befehle, die in verschiedenartigen Komponenten der programmgesteuerten Einheit ausführbar sind, gleichzeitig ausgeführt werden. Im betrachteten Beispiel können ein Kontrollfluß-Befehl, ein Speicherzugriffs-Befehl, ein oder mehrere Kopier-Befehle und/oder ein oder mehrere arithmetisch-logische Befehle gleichzeitig ausgeführt werden.

Die arithmetisch-logischen Befehle umfassen die Befehle, die arithmetische und/oder logische Operationen erfordern, also beispielsweise den Additionsbefehl ADD, den Rotationsbefehl ROL (rotate left), oder logische Verknüpfungen wie AND (logisches UND) etc.

Die Kopier-Befehle umfassen die Befehle, die ein Datum aus einem internen Register in ein anderes internes Register kopieren oder den Inhalt zweier Register austauschen, also beispielsweise MOVE- und EXCHANGE-Befehle. Die Kopier-Befehle sind eng mit den arithmetisch-logischen Befehlen verbunden, da es sich in beiden Fällen um interne Operationen handelt. Bei den Kopier-Befehlen erfolgt jedoch im Gegensatz zu den arithmetisch-logischen Befehlen keine Datenmanipulation.

Die (auch als Load/Store-Befehle bezeichneten) Speicherzugriffs-Befehle umfassen die Befehle, die Datentransfers in und aus Speichereinrichtungen bezwecken, also beispielsweise LOAD-, STORE-, PUSH- und POP-Befehle.

Die Kontrollfluß-Befehle umfassen den Programmablauf beeinflussende Befehle wie beispielsweise unbedingte Sprünge, bedingte Verzweigungen, Unterprogrammaufrufe, Rücksprünge etc. (BRANCH-, JUMP-, CALL-, RETURN-Befehle etc.).

Aus der nachfolgenden Tabelle ist ersichtlich, welche Aktionen bei den Befehlen der einzelnen Befehlsgruppen in den jeweiligen Phasen der Befehlsabarbeitung durchgeführt werden.

| | | | | |
|---|---|---|---|---|
| Befehlsgruppe | Aktion in der IF-Phase | Aktion in der DL-Phase | Aktion in der EX/MEM-Phase | Aktion in der WB-Phase |
| Arithmetischlogische Befehle und Kopierbefehle | Befehl aus Speicher laden | Registerinhalte für ALU laden | ALU-Operation durchführen | Ergebnis in Register schreiben |
| Load/Store-Befehle | Befehl aus Speicher laden | Registerinhalt als Adresse laden | Datentransfer in/aus Speicher | Datentransfer in/aus Register |
| Kontrollfluß-Befehle | Befehl aus Speicher laden | Programmzähler laden | Sprungadresse berechnen | Neue Adresse in den Programmzähler schreiben |

Die arithmetisch-logischen Befehle, die Kopier-Befehle, und die Load-Store-Befehle werden nachfolgend als Datenfluß-Befehle bezeichnet.

Wie vorstehend bereits erwähnt wurde, können ein Kontrollfluß-Befehl und/oder ein oder mehrere Datenfluß-Befehle parallel ausgeführt werden.

Kontrollflußbefehle können im betrachteten Beispiel parallel zu anderen Befehlen ausgeführt werden, weil sie - anders als die anderen Befehle - nicht in der ALU, sondern in der IF-Einheit ausgeführt werden. Die Ausführung der Kontrollfluß-Befehle läßt sich problemlos in die IF-Einheit verlagern, weil dabei - wenn überhaupt - nur einfachste arithmetische Operationen durchzuführen sind und die Beeinflussung des Programmzählers sehr einfach in die IF-Einheit zu integrieren ist (die IF-Einheit muß ohnehin eine Verbindung zum Programmzähler haben). Die Ausführung von Kontrollfluß-Befehlen in der IF-Einheit ermöglicht es, daß gleichzeitig in der ALU ein anderer Befehl ausgeführt wird. Es muß "nur" darauf geachtet werden, daß keine Datenabhängigkeiten vorliegen, d.h. daß der eigentlich später auszuführende Befehl nicht Daten verwendet, die der eigentlich früher auszuführende Befehl erzeugt. Solche Datenabhängigkeiten können jedoch problemlos gehandhabt oder ausgeschlossen werden.

Dies wird deutlich, wenn man die Adressierungsformen betrachtet, die üblicherweise in Kontrollfluß-Befehlen von RISC-Prozessoren vorgesehen sind. Die typischerweise verwendeten Adressierungsformen sind die absolute Adressierung, die PC-relative Adressierung, und die indirekte Adressierung.

Bei der absoluten Adressierung beinhaltet der betreffende Befehl bereits die Adresse, die bei Ausführung der (Kontrollfluß-)Operation in den Programmzähler (PC) geladen wird.

Bei der PC-relativen Adressierung, die sehr häufig bei Verzweigungsbefehlen (Branch-Befehlen) benutzt wird, enthält der betreffende Befehl nur den Offset der neuen Adresse zum aktuellen PC-Inhalt. Zur Ermittlung des neuen PC-Inhaltes ist eine einfache Berechnung (Addition oder Subtraktion) erforderlich, doch existieren - abgesehen von dem zu modifizieren PC-Inhalt - keine Abhängigkeiten von Datenregistern des Prozessors.

Bei der indirekten Adressierung wird (zumindest bei RISC-Prozessoren) der neue PC-Inhalt aus einem Register des Prozessors oder einem Speicher bezogen. Dies ist im betrachteten Beispiel die einzige Art von Kontrollfluß-Befehlen, bei der Datenabhängigkeiten auftreten können.

Falls bei Kontrollfluß-Befehlen (beispielsweise bei Kontrollfluß-Befehlen mit indirekter Adressierung) Datenabhängigkeiten auftreten oder auftreten können, so kann man diesen einfach dadurch begegnen, daß ein oder mehrere Wartezyklen eingeführt werden (daß mit der Ausführung des betreffenden Kontrollfluß-Befehls so lange gewartet wird, bis von vorher auszuführenden Befehlen vorzunehmende Zugriffe auf die Register oder Speicherzellen, deren Inhalt für die Kontrollflußbefehlsausführung benötigt wird, erfolgt sind). Alternativ kann vorgesehen werden, daß im Befehlsvorrat des Prozessors nur Kontrollfluß-Befehle mit absoluter und/oder PC-relativer Adressierung vorhanden sind, oder daß die parallele Abarbeitung von Kontrollfluß-Befehlen und sonstigen Befehlen auf Kontrollfluß-Befehle mit absoluter und/oder PC-relativer Adressierung beschränkt wird. Dadurch lassen sich Datenabhängigkeiten bei der parallelen Ausführung von Kontrollfluß-Befehlen und sonstigen Befehlen prinzipiell vermeiden.

Wenn der Prozessor mit einer sogenannten Branch-Prediction arbeitet, muß bei der parallelen Ausführung von Kontrollfluß-Befehlen und sonstigen Befehlen dafür gesorgt werden, daß mehrere der zuletzt ausgeführten Befehle reversibel sind. Branch-Prediction bedeutet, daß vorhergesagt wird, ob eine bedingte Verzweigung durchgeführt wird oder nicht. Bei der Branch-Prediction handelt es sich um eine bekannte Technologie, so daß eine nähere Erläuterung unterbleiben kann; wegen weiterer Einzelheiten zu diesem Thema wird auf die vorstehend bereits erwähnte Literaturstelle von J. L. Hennessy et al. verwiesen.

Wie vorstehend bereits erwähnt wurde, können nicht nur ein Datenfluß-Befehl und ein Kontrollfluß-Befehl gleichzeitig ausgeführt werden; zusätzlich oder alternativ können im vorliegend betrachteten Prozessor auch bestimmte Datenfluß-Befehle gleichzeitig (parallel) ausgeführt werden.

Die Datenfluß-Befehle umfassen, wie vorstehend bereits erläutert wurde, die arithmetisch-logischen Befehle, die Kopier-Befehle, und die Load/Store- bzw. Speicherzugriffs-Befehle.

Sorgt man dafür, daß Zugriffe des Prozessors auf externe oder interne Speicher ausschließlich über Load/Store-Befehle erfolgen, die arithmetisch-logischen Befehle also ausschließlich auf interne Registerinhalte wirken, so können im wesentlichen ohne oder jedenfalls ohne nennenswerten Mehraufwand ein Load/Store-Befehl und ein arithmetisch-logischer Befehl oder ein Load/Store-Befehl und ein Kopier-Befehl gleichzeitig ausgeführt werden. Ohne Mehraufwand, weil die Ausführung von arithmetisch-logischen Befehlen und Kopier-Befehlen einerseits und die Ausführung von Load/Store-Befehlen andererseits mangels Gemeinsamkeiten in der Befehlsausführung ohnehin weitestgehend durch separate Komponenten des Prozessors (der EX/MEM-Teileinheit desselben) ausgeführt werden, und diese Komponenten damit nur noch vollständig entkoppelt und als unabhängig voneinander betreibbare (insbesondere unabhängig voneinander parallel betreibbare) Prozessor-Komponenten ausgebildet werden müssen.

Bei der gleichzeitigen Ausführung von mehreren DatenflußBefehlen (eventuell zusammen mit einem Kontrollfluß-Befehl) muß wiederum auf gegebenenfalls vorhandene Datenabhängigkeiten geachtet werden. Dies ist jedoch bei der sehr einfachen Struktur des Prozessors und dem begrenzten Maß an Parallelisierung mit verhältnismäßig geringem Aufwand bewerkstelligbar.

Die parallele Ausführung von Befehlen in prinzipiell nach Figur 4 aufgebauten programmgesteuerten Einheiten kann sogar noch weiter gehen.

Mit verhältnismäßig geringem Mehraufwand können zusätzlich oder alternativ auch Kopier-Befehle und arithmetisch-logische Befehle parallel ausgeführt werden, denn auch diese sind mangels Gemeinsamkeiten in den zur Befehlsausführung durchzuführenden Operationen ohnehin in verschiedenen Komponenten des Prozessors (der ALU desselben) auszuführen. Auch hier muß also nur eine Entkopplung der die Befehle ausführenden Prozessor-Komponenten erfolgen. Durch eine entsprechende Entkopplung der Komponenten der ALU des Prozessors kann sogar erreicht werden, daß mehrere arithmetisch-logische Befehle und mehrere Kopier-Befehle parallel ausgeführt werden können. Eine ALU, die es auf sehr einfache Weise ermöglicht, Kopier-Befehle und arithmetisch-logische Befehle gleichzeitig auszuführen, ist die später noch genauer beschriebene rekonfigurierbare ALU (rALU).

Damit können dann ein Kontrollfluß-Befehl, ein Speicherzugriffs-Befehl, ein oder mehrere arithmetisch-logische Befehle und/oder ein oder mehrere Kopier-Befehle parallel zueinander ausgeführt werden.

Voraussetzung hierfür ist wiederum die Erkennbarkeit und/oder die Auflösbarkeit von Datenabhängigkeiten.

Die parallele Ausführung von Befehlen kann darüber hinaus auch von der Möglichkeit zur Branch Prediction abhängig gemacht werden.

Dadurch, daß - anders als bei superskalaren Prozessoren oder anderen Prozessoren, die eine gleichzeitige Ausführung von mehreren Befehlen gestatten - nicht etwa beliebige, sondern nur ganz bestimmte Befehle gleichzeitig ausgeführt werden können, weist der vorliegend betrachtete Prozessor einen vergleichsweise sehr einfachen Aufbau auf. Wie nachfolgend noch genauer beschrieben wird, ist es insbesondere nicht erforderlich, mehrere EX/MEM-Einheiten (ALUs) und eine diese Einheiten koordinierende und überwachende Einheit vorzusehen.

Die gleichzeitige Ausführung mehrerer Befehle setzt voraus, daß im Prozessor mehrere Befehle zur Ausführung bereitstehen. Hierzu kann beispielsweise vorgesehen werden, mehrere IF-Einheiten vorzusehen. Das Vorsehen von mehreren IF-Einheiten ist naturgemäß mit einem höheren Aufwand verbunden als das Vorsehen von nur einer IF-Einheit. Nichtsdestotrotz ist ein Prozessor, der "nur" die IF-Einheit mehrfach enthält, erheblich viel einfacher aufgebaut als ein superskalarer Prozessor oder andere Prozessoren, die in der Lage sind, mehrere Befehle gleichzeitig auszuführen.

Statt mehreren IF-Einheiten kann im Prozessor ein interner Speicher vorgesehen werden, in welchem die zuvor aus einem Programm- und/oder Datenspeicher geholten Befehle oder diese repräsentierende Daten mehr oder weniger lange über den Zeitpunkt der Befehlsausführung hinaus gespeichert werden. Bei wiederholter Ausführung von im internen Speicher gespeicherten Befehlen (beispielsweise bei wiederholten Schleifendurchläufen) müssen die auszuführenden Befehle dann nicht mehr aus dem Programm- und/oder Datenspeicher geholt werden, sondern können gleich aus dem internen Speicher ausgelesen werden. Als besonders vorteilhaft erweist es sich dabei, wenn die aus dem Programm- und/oder Datenspeicher gelesenen Befehle neben der (sequentiellen) Abarbeitung derselben in gleichzeitig ausführbare Befehle umfassende Makrobefehle umgesetzt und intern gespeichert werden. Dann kann die gleichzeitige Ausführung mehrerer Befehle besonders schnell und einfach durchgeführt werden. Beim vorliegend betrachteten RISC-Prozessor wird von der besonders effizienten letztgenannten Möglichkeit Gebrauch gemacht. Die hierzu erforderlichen Maßnahmen und der Aufbau eines solchen, im folgenden als Fetch Look-Aside Buffer (FLAB) bezeichneten internen Speichers werden später noch genauer beschrieben.

Zunächst wird die beim vorliegend näher betrachteten Prozessor zum Einsatz kommende arithmetisch-logische Einheit (ALU) betrachtet. Diese ALU unterscheidet sich von herkömmlichen ALUs und wird zur Kennzeichnung dessen als rekonfigurierbare ALU bzw. rALU bezeichnet.

Die rALU besteht aus kleinen, unabhängig voneinander und damit auch gleichzeitig betreibbaren Teileinheiten mit fester oder variierbarer Funktion und konfigurierbaren Datenpfaden, wobei die Konfiguration der Teileinheiten und der Datenpfade dynamisch, d.h. während des Betriebes der rALU abhängig von den darin auszuführenden Befehlen erfolgen kann.

Eine derart aufgebaute ALU läßt sich einfacher und effizienter betreiben als es bei herkömmlichen ALUs der Fall ist, und ermöglicht es darüber hinaus auf relativ einfache Art und Weise, mehrere Befehle gleichzeitig auszuführen, was bei herkömmlichen ALUs ebenfalls nicht der Fall ist.

Vor der detaillierten Beschreibung der rALU soll zunächst auf eine herkömmliche ALU eingegangen werden. Der zumeist gefundene Aufbau entspricht der Darstellung in Figur 5. In der ALU sind alle arithmetischen und logischen Berechnnungskapazitäten zusammengefaßt, die der Prozessor für die Verarbeitung von Daten zu neuen Datenwerten zur Verfügung stellt. Die in der Figur 5 gezeigte ALU verfügt über Eingangsanschlüsse I1 und I2 (zur Operanden-Eingabe), Ausgangsanschlüsse O (für das zu erzeugende Ergebnis) und OSF (für Status-Flags), und Steueranschlüsse C (zur Operations-Auswahl) und CSF (für Status-Flags). Über die Steueranschlüsse C und CSF wird (durch das Leitwerk des Prozessors) bestimmt, welche Operation an den über die Eingangsanschlüsse I1 und I2 eingegebenen Daten auszuführen ist.

Eine derart aufgebaute ALU hat im Vergleich zur neuartigen, nicht oder allenfalls unwesentlich komplizierter aufgebauten rALU den Nachteil, daß nur immer ein einziger Befehl abgearbeitet werden kann, und daß von der ALU immer nur ein verhältnismäßig kleiner Teil genutzt werden kann.

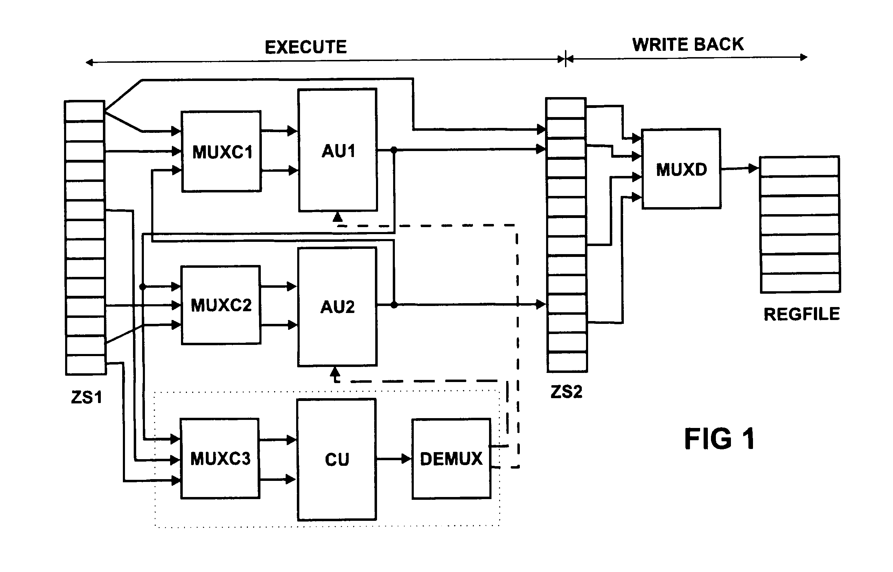

Der prinzipielle Aufbau der neuartigen rALU ist in Figur 1 dargestellt. Sie umfaßt mit MUXC1, MUXC2 und MUXC3 bezeichnete Multiplexer eines ersten Typs, mit AU1 und AU2 bezeichnete arithmetische Einheiten, eine mit CU bezeichnete Vergleichs-Einheit, einen mit DEMUX bezeichneten Demultiplexer, und mindestens einen mit MUXD bezeichneten Multiplexer eines zweiten Typs (einen Multiplexer MUXD pro Register eines Register File REGFILE).

Durch die rALU werden
- in einer ersten Phase (der Befehlsausführungs- bzw. Execute-Phase) in einem ersten Zwischenspeicher ZS1 gespeicherte Daten arithmetisch und/oder logisch verarbeitet und das Ergebnis der Verarbeitung repräsentierende Daten in einen zweiten Zwischenspeicher ZS2 eingeschrieben, und
- in einer zweiten Phase (der Zurückschreib- bzw. Write-Back-Phase) im zweiten Zwischenspeicher ZS2 gespeicherte Daten in das bereits erwähnte Registerfile REGFILE transferiert.

In diesem Zusammenhang sei nochmals daran erinnert, daß Adreßberechnungen hiervon ausgenommen sind; diese werden, wie vorstehend bereits erwähnt wurde, im betrachteten Beispiel nach Möglichkeit vorzugsweise in der IF-Einheit ausgeführt.

Die Zwischenspeicher ZS1 und ZS2 sind die Zwischenspeicher, die üblicherweise zwischen aufeinanderfolgenden Stufen der Befehlsabarbeitungs-Pipeline vorgesehen werden; der Zwischenspeicher ZS1 dient der rALU als Operandenspeicher, und der Zwischenspeicher ZS2 als Ergebnisspeicher. Die Größe der Zwischenspeicher hängt von den individuellen Bedürfnissen ab.

Das register file REGFILE ist ein Registerblock, der die (General-Purpose-)Register des Prozessors enthält.

Die arithmetischen Einheiten AU1, AU2 weisen im betrachteten Beispiel zwei Eingangsanschlüsse, einen Ausgangsanschluß, und einen Steueranschluß auf. Den arithmetischen Einheiten obliegt es, die über deren Eingangsanschlüsse eingegebene Eingangssignale arithmetisch und/oder logisch zu verarbeiten.

Die Operationen, die durch die arithmetischen Einheiten AU1, AU2 ausführbar sind, können fest vorgegeben oder dynamisch einstellbar (konfigurierbar) sein; sie umfassen insbesondere arithmetische Operationen wie Addition, Subtraktion, Multiplikation, Division etc., logische Verknüpfungen wie UND-Verknüpfungen, ODER-Verknüpfungen, Invertierung, Komplementbildung etc., arithmetische und logische Shift-Operationen, und Datentransfers (Durchschaltung eines der eingegebenen Signale zum Ausgangsanschluß). Die einzelnen arithmetischen Einheiten sind dabei jedoch jeweils zur Durchführung von nur wenigen Operationen ausgelegt, wodurch deren Aufbau und deren Betrieb relativ einfach sein können. Zur Vermeidung von Mißverständnissen sei darauf hingewiesen, daß die arithmetischen Einheiten AU1, AU2 nicht jeweils einer Arithmetisch-Logischen Einheit (ALU) herkömmlicher Prozessoren entsprechen. Die arithmetischen Einheiten sind nur Bestandteile einer einer Arithmetisch-Logischen Einheit (ALU) entsprechende Einrichtung; die arithmetischen Einheiten bilden erst in Kombination miteinander und zusammen mit den Vergleichseinheit(en), den Multiplexern und den Demultiplexern eine einer Arithmetisch-Logischen Einheit (ALU) entsprechende Einrichtung. Die mehreren arithmetischen Einheiten sind damit auch nicht mit den mehreren ALUs von superskalaren Prozessoren gleichzusetzen. Über die Steueranschlüsse der arithmetischen Einheiten AU1, AU2 ist festlegbar, ob die betreffende arithmetische Einheit die Operation, zu deren Ausführung sie vorgesehen ist, ausführt oder nicht. Dies ermöglicht die praktische Umsetzung von Befehlen, deren Ausführung vom Vorliegen einer bestimmten Bedingung abhängt. Die Bedingung kann beispielsweise der Zustand eines bestimmten Flags sein: ist das Flag gesetzt, wird die der betreffenden arithmetischen Einheit obliegende Aufgabe (beispielsweise eine Addition) ausgeführt, anderenfalls nicht (oder umgekehrt). Derartige, nachfolgend als "konditionierte Befehle" oder "predicated instructions" bezeichnete Befehle ermöglichen es, die schwer handhabbaren bedingten Sprungbefehle zu eliminieren. Bezüglich weiterer Einzelheiten zu den predicated instructions und deren Generierung wird auf Wen-Mei W. Hwu et. al.: "Compiler Technology for Future Microprocessors", Invited Paper in Proceedings of the IEEE Vol. 83(12), Special Issue on Microprocessors, S. 1625 - 1640, Dez. 1995 verwiesen. Die Verwendung von predicated instructions sowie die zu deren Ausführung erforderlichen ALU-Komponenten, d.h. die Steueranschlüsse der arithmetischen Einheiten AU1, AU2, der Multiplexer MUXC3, die Vergleichs-Einheit CU, und der Demultiplexer DEMUX sind optional und können gegebenenfalls entfallen.

Die Vergleichs-Einheit CU weist im betrachteten Beispiel zwei Eingangsanschlüsse und einen Ausgangsanschluß auf. Der Vergleichs-Einheit CU obliegt es, die an deren Eingangsanschlüssen anliegenden Signale oder Daten Vergleichsoperationen zu unterziehen. Die Operationen, die durch die Vergleichs-Einheit CU ausführbar sind, können fest vorgegeben oder dynamisch einstellbar (konfigurierbar) sein; sie umfassen beispielsweise Größer-, Größer/Gleich-, Kleiner-, Kleiner/ Gleich-, Gleich, und Ungleich-Vergleiche sowie feste Einstellungen des Ausgabgssignals auf wahr (TRUE) und unwahr (FALSE). Der Ausgangsanschluß der Vergleichs-Einheit CU ist über den nachfolgend noch genauer beschriebenen Demultiplexer DEMUX mit den Steueranschlüssen der arithmetischen Einheiten AU1, AU2 verbunden. Vom Ergebnis der in der Vergleichs-Einheit CU hängt es also ab, ob die arithmetischen Einheiten AU1, AU2 die Operation, zu deren Ausführung sie vorgesehen sind, ausführen oder nicht.

Die Multiplexer des ersten Typs MUXC1, MUXC2, und MUXC3, der Multiplexer des zweiten Typs MUXD, und der Demultiplexer DEMUX dienen zur dynamischen Auswahl der Daten- und/oder Signalquellen und der Daten- und/oder Signalziele. Genauer gesagt dienen
- der Multiplexer MUXC1 zur Auswahl der Quellen der den Eingangsanschlüssen der arithmetischen Einheit AU1 zugeführten Daten und/oder Signale (mögliche Daten- und/oder Signalquellen sind im betrachteten Beispiel der erste Zwischenspeicher ZS1 und die Ausgangsanschlüsse der arithmetischen Einheiten),
- der Multiplexer MUXC2 zur Auswahl der Quellen der den Eingangsanschlüssen der arithmetischen Einheit AU2 zugeführten Daten und/oder Signale (mögliche Daten- und/oder Signalquellen sind im betrachteten Beispiel der erste Zwischenspeicher ZS1 und die Ausgangsanschlüsse der arithmetischen Einheiten),
- der Multiplexer MUXC3 zur Auswahl der Quellen der den Eingangsanschlüssen der Vergleichs-Einheit CU zugeführten Daten und/oder Signale (mögliche Daten- und/oder Signalquellen sind im betrachteten Beispiel der erste Zwischenspeicher ZS1 und die Ausgangsanschlüsse der arithmetischen Einheiten),
- der Multiplexer MUXD zur Auswahl der Quelle der einem bestimmten Register des register file REGFILE zuzuführenden Daten und/oder Signale (mögliche Daten- und/oder Signalquellen sind im betrachteten Beispiel der zweite Zwischenspeicher ZS2),
- der Demultiplexer DEMUX zur Auswahl des oder der Ziele für die von der Vergleichs-Einheit CU ausgegebenen Daten und/oder Signale (mögliche Daten- und/oder Signalziele sind im betrachteten Beispiel die Steueranschlüsse der arithmetischen Einheiten).

Die Multiplexer des ersten Typs weisen mehrere Eingangsanschlüsse und zwei Ausgangsanschlüsse auf, der Multiplexer des zweiten Typs mehrere Eingangsanschlüsse und einen Ausgangsanschluß, der Demultiplexer einen Eingangsanschluß und mehrere Ausgangsanschlüsse.

Die Multiplexer und der Demultiplexer weisen darüber hinaus in der Figur 1 nicht gezeigte Steueranschlüsse auf, über welche einstellbar ist, welche Eingangsdaten und/oder -signale auf welche Ausgangsanschlüsse durchgeschaltet werden. Die Anzahl der Steueranschlüsse hängt von der erforderlichen Anzahl von Zuordnungskombinationen ab; bei 32 Eingangsanschlüssen und zwei Ausgangsanschlüssen sind beispielsweise 10 Steueranschlüsse erforderlich, um an beliebigen Eingangsanschlüssen anliegende Signale und/oder Daten auf beliebige Ausgangsanschlüsse durchschalten zu können.

Es dürfte einleuchten, daß die Anzahlen der arithmetischen Einheiten, der Vergleichs-Einheiten, der Multiplexer und der Demultiplexer nicht wie im vorliegend betrachteten Beispiel gewählt werden müssen; sie können auch beliebig höher oder niedriger gewählt werden.

Durch eine entsprechende Zusammenstellung und/oder eine entsprechende Konfiguration der konfigurierbaren Bestandteile der rALU, also der arithmetischen Einheiten, der Vergleichs-Einheiten, der Multiplexer und der Demultiplexer können durch die rALU beliebige Befehle ausgeführt werden. Da die konfigurierbaren rALU-Bestandteile dynamisch, d.h. während des Betriebes des Prozessors, und unabhängig voneinander individuell konfigurierbar sind, kann durch die rALU eine beliebige Folge von beliebigen Befehlen ausgeführt werden.

Dadurch, daß die einzelnen Komponenten der rALU gleichzeitig und unabhängig voneinander betreibbar sind, können mehrere in der rALU auszuführende Befehle, also beispielsweise ein oder mehrere arithmetisch-logische und/oder ein oder mehrere Kopier-Befehle gleichzeitig in dieser ausgeführt werden.

Gleichwohl ist die beschriebene rALU nicht oder nur unwesentlich komplizierter als die ALUs von herkömmlichen Prozessoren. Die rALU ist gegenüber der ALU eines herkömmlichen Prozessors "nur" umstrukturiert. Die rALU ist auch nicht komplizierter und/oder langsamer zu betreiben als die ALU eines herkömmlichen Prozessors; die Konfigurierung der rALU gestaltet sich aufgrund des klar strukturierten Aufbaus derselben als sehr einfach, und in der rALU auszuführende Befehle werden maximal schnell ausgeführt.

RISC-Prozessoren mit der vorstehend beschriebenen rALU werden nachfolgend als rekonfigurierbare RISC-Prozessoren bzw. rRISC-Prozessoren bezeichnet.

Die rALU läßt sich besonders effizient betreiben, wenn die auszuführenden Befehle aus dem vorstehend bereits erwähnten und nun genauer beschriebenen FLAB geholt werden können.

Der vorliegend betrachtete (rRISC-)Prozessor arbeitet, obgleich er mit rALU und FLAB ausgestattet ist, im Normalfall wie ein herkömmlicher RISC-Prozessor. D.h., er holt auszuführende Befehle aus dem Programm- und/oder Datenspeicher und arbeitet sie sequentiell ab. Parallel hierzu werden jedoch - durch die IF-Einheit oder eine andere Einrichtung (beispielsweise durch die den FLAB enthaltende Prozessorkomponente) - mehrerer Befehle umfassende Makrobefehle generiert und im FLAB gespeichert.

Die im FLAB gespeicherten Befehle können, wenn diese erneut ausgeführt werden müssen, aus dem FLAB ausgelesen und ausgeführt werden. Sofern die Speicherkapazität des FLAB relativ gering ist, was in der Praxis häufig der Fall sein wird, wird dies in der Regel "nur" bei wiederholten Schleifendurchläufen der Fall sein. Ist ein im FLAB gespeicherter Programmteil erneut auszuführen, so holt die IF-Einheit die entsprechenden Befehle nicht wieder aus dem Programm- und/oder Datenspeicher, sondern aus dem FLAB.

Die zu einem Makrobefehl zusammengefaßten Befehle sind vorzugsweise Befehle, die gleichzeitig ausführbar sind, und deren gleichzeitige Ausführung das Von-Neumann-Prinzip nicht verletzt. Dadurch können ohne Vorsehen von mehreren IF-Einheiten oder vergleichbarer Maßnahmen, also denkbar einfach und mit minimalem Aufwand gleichzeitig mehrere Befehle zur Ausführung gebracht werden.

Im betrachteten Beispiel kann sich ein Makrobefehl aus einem oder mehreren arithmetisch-logischen Befehlen, einem oder mehreren Kopier-Befehlen, einem Speicherzugriffs-Befehl, und einen Kontrollfluß-Befehl zusammensetzen. Die Makrobefehle können unabhängig voneinander beliebig viele Befehle umfassen, wobei die maximale Anzahl von Befehlen pro Makrobefehl von den im Prozessor verfügbaren Ressourcen abhängt und prinzipiell beliebig groß sein kann.

Wie vorstehend bereits mehrfach erwähnt wurde, können nur bestimmte Befehle parallel ausgeführt werden. Beispielsweise können von der Befehlsfolge
1) move R4,#55h;
2) add R2,R3,R1
3) and R5,R4,R2
"nur" die Befehle 1 und 2 parallel zueinander ausgeführt werden, weil nur diese keine Datenabhängigkeiten aufweisen. Befehl 3 darf erst nach Befehl 1 und 2 ausgeführt werden, weil die Inhalte der von Befehl 3 benutzten Register vor der Benutzung durch Befehl 3 verändert werden müssen (der Inhalt des Registers R4 wird durch Befehl 1 geändert) oder erst nach der Ausführung von Befehl 2 verändert werden dürfen (der Zugriff auf das Registers R2 durch Befehl 2 muß erfolgen, bevor der Inhalt des Registers R2 durch Befehl 3 verändert wird).

Der FLAB ist im betrachteten Beispiel als zeilenorientierter Speicher mit mehreren Abschnitten aufgebaut. Er ist konzipiert, um Befehle einzeln oder zusammengefaßt in der bisherigen Codierung und/oder als eine Strukturinformation zu speichern, wobei die Strukturinformation die Daten (die Konfigurationsbits) enthält, unter Verwendung welcher die rALU konfiguriert werden muß, um den oder die in dieser auszuführenden Befehle, also die Kopier-Befehle und/oder die arithmetisch-logischen Befehle auszuführen. Der Algorithmus zur Übersetzung von Kopier-Befehlen und arithmetisch-logischen Befehlen in eine Strukturinformation wird später noch genauer beschrieben.

Zur Vermeidung von Komplikationen werden vorzugsweise nur Befehle zusammengefaßt und parallel ausgeführt, die dem selben Basisblock angehören. Ein Basisblock ist eine Befehlsfolge mit nur einem Austrittspunkt, genauer gesagt eine Befehlsfolge, die nur als Reaktion auf deren letzten Befehl verlassen werden kann. Bei der Festlegung der Basisblöcke kommt es auf den tatsächlichen Programmablauf an. Insbesondere wenn ein auszuführendes Programm bedingte Sprungbefehle enthält, kann der das Sprungziel enthaltende Basisblock variierende Längen, genauer gesagt variierende Anfangspunkte haben; wie aus einem später noch beschriebenen ersten Beispielprogramm ersichtlich ist, kann der das Sprungziel eines bedingten Sprunges enthaltende Basisblock im Falle der Sprungausführung später beginnen als ohne Sprungausführung.

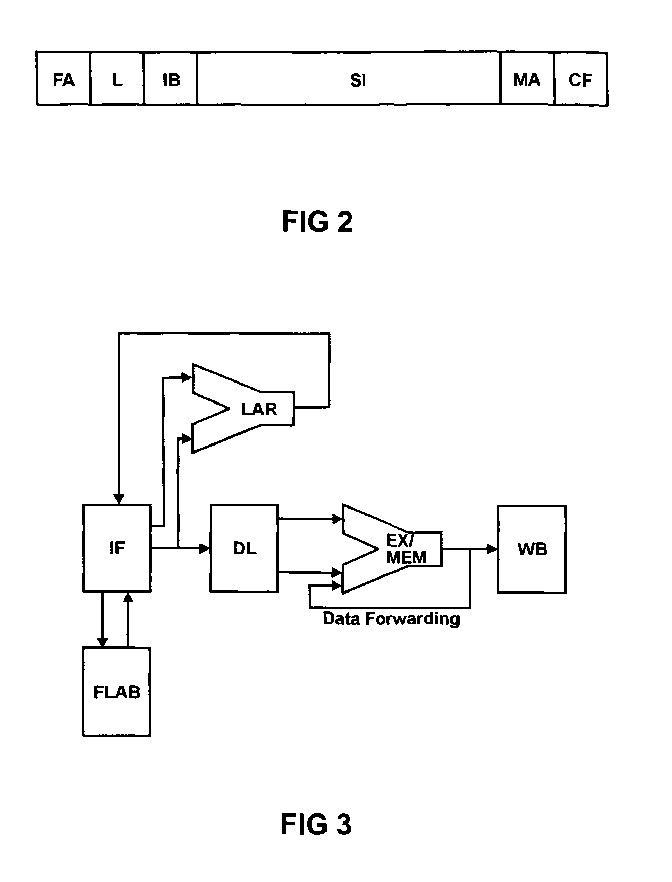

Der Aufbau einer FLAB-Zeile ist in Figur 2 veranschaulicht. Wie aus der Darstellung ersichtlich ist, ist eine FLAB-Zeile im betrachteten Beispiel in sechs Felder unterteilt, welche
- die Adresse des ersten Befehls der in der betreffenden FLAB-Zeile gespeicherten Befehlsfolge (First-Address-Feld FA)
- die Länge der in der betreffenden FLAB-Zeile gespeicherten Befehlsfolge oder die letzte Adresse derselben (Length-Feld L),
- ein Status-Bit das anzeigt, ob der oder die im Structure-Information-Feld gespeicherten Befehle im Original-Code oder in übersetzter Form (als Strukturinformation zur Strukturierung der rALU) vorliegt (Indication-Bit IB),
- Strukturinformationen zur Strukturierung der rALU für in dieser auszuführende Befehle (Structure-Information-Feld SI),
- einen parallel zu den im Structure-Information-Feld SI gespeicherten arithmetisch-logischen Befehlen und/oder Kopier-Befehlen ausführbaren Speicherzugriffs-Befehl (Memory-Access-Feld MA), und
- einen parallel zu den im Structure-Information-Feld SI gespeicherten arithmetisch-logischen Befehlen und/oder Kopier-Befehlen und/oder zu dem im Memory-Access-Feld MA gespeicherten Speicherzugriffs-Befehl ausführbaren Kontrollfluß-Befehl (Control-Flow-Feld CF)
speichern.

Die im First-Address-Feld FA und im Length-Feld L gespeicherten Informationen dienen zur Ermittlung, ob im FLAB gespeicherte Makrobefehle anstelle der "normalen" (aus dem Programm- und/oder Datenspeicher geholten) Befehle verwendet werden können, und zum korrekten Setzen des Programmzählers bei Nutzung von im FLAB gespeicherten Befehlen.

Das im Indication-Bit-Feld IB gespeicherte Indication-Bit ist erforderlich, weil bei der Ausführung des in der betreffenden FLAB-Zeile gespeicherten Makrobefehls unter Auslassung der DL-Phase direkt in die Execute-Phase eingesprungen werden kann, wenn der oder die in der rALU auszuführenden Befehle bereits in eine Strukturinformation übersetzt sind. Während des Holens und Ausführens von in eine Strukturinformation übersetzten Befehlen können Prefetches von Befehlen aus dem Programm- und/oder Datenspeicher ausgeführt und die dabei geholten Befehle dekodiert werden.

Das Structure-Information-Feld SI enthält im betrachteten Beispiel
- alle Konfigurationsdaten (alle Konfigurationsbits), die erforderlich sind, um die rALU (deren AUs, CUs, Multiplexer und Demultiplexer) so zu konfigurieren, daß die darin auszuführenden Operationen bestimmungsgemäß ausgeführt werden, und
- die Konstanten, unter Verwendung welcher die betreffenden Operationen auszuführen sind.

In die Strukturinformation kann auch das sogenannte Data Forwarding eingearbeitet werden. Beim Data Forwarding werden als Daten- und/oder Signalquellen nicht stur die in den Befehlen angegebenen Daten- und/oder Signalquellen verwendet, sondern nach Möglichkeit die physikalische Teileinheit, die die betreffende Daten- und/oder Signalquelle zuvor zu beschreiben hat. Dies erweist sich in zweifacher Hinsicht als vorteilhaft: einerseits, weil eventuell weniger Register benötigt werden (wenn die in der Instruktion angegebene Daten-und/oder Signalquelle nicht als solche verwendet wird, muß sie auch nicht beschrieben werden und kann gegebenenfalls ganz weggelassen werden), und andererseits, weil die benötigten Daten bei Abholung von der diese erzeugenden Teileinheit (beispielsweise von einer arithmetischen Einheit) früher verfügbar sind als wenn sie zuerst in ein Register geschrieben und von dort abgeholt werden müssen. Das Data Forwarding kann bei allen Befehlen zur Anwendung kommen und erweist sich im Durchschnitt als enormer Vorteil.

Das Memory-Access-Feld MA und das Control-Flow-Feld CF enthalten parallel zu den im Structure-Information-Feld SI enthaltenen arithmetisch-logischen Befehlen und/oder Kopier-Befehlen ausführbare Speicherzugriffs-Befehle (Memory-Access-Feld MA) und Kontrollfluß-Befehle (Control-Flow-Feld CF). Diese Befehle werden in der Regel im Original-Code gespeichert. Bei Kontrollfluß-Befehlen ist es nützlich, die exakte Zieladresse (neuer PC) sowie die gewählte branch prediction (branch taken; branch not taken) mitzuspeichern, um die spätere Auswertung zu erleichern und beschleunigen.

Ein so oder anders aufgebauter FLAB kann wie in Figur 3 veranschaulicht in die rRISC-Architektur integriert werden.

Der prinzipielle Aufbau des rRISC-Prozessors entspricht weitgehend dem in der Figur 4 gezeigten Aufbau herkömmlicher RISC-Prozessoren. Die rRISC-Architektur umfaßt wie die RISC-Architektur eine IF-Einheit, eine DL-Einheit, eine EX/MEM-Einheit, und eine WB-Einheit. Sie enthält allerdings zusätzlich den vorstehend ausführlich beschriebenen FLAB und weist darüber hinaus eine völlig andersartige EX/MEM-Einheit, genauer gesagt eine rALU anstatt einer ALU auf.

Der betrachtete rRISC-Prozessor enthält ferner eine Look-Ahead-Resolution-Einheit LAR (zur Unterstützung der IF-Einheit bei der dort erfolgenden Ausführung von Kontrollfluß-Befehlen), und Vorkehrungen für ein Data Forwarding.

Der FLAB wird im betrachteten Beispiel von der IF-Einheit beschrieben und ausgelesen. Wenn sich die Übersetzung eines Befehls in eine Strukturinformation innerhalb eines Taktes bewerkstelligen läßt, was in der Regel der Fall sein dürfte, erfolgt das Beschreiben des FLAB zeitlich parallel zur DL-Phase des betreffenden Befehls.

Im folgenden wird anhand von zwei Modellarchitekturen RR1 und RR2 und einigen Beispielprogrammen die Leistungsfähigkeit von rRISC-Prozessoren demonstriert.

Die Modellarchitekturen RR1 und RR2 stellen vereinfachte 16-Bit-Registerarchitekturen mit Phasenpipelining und 16 Bit breitem Adreß- und Datenbus dar. Für das zeitliche Verhalten beider Modelle wird folgendes angenommen
- das theoretische CPI liegt bei 1, d.h., generell ist jeder Befehl in einem Takt ausführbar,
- es ist ein Data Forwarding integriert (das Data Forwarding ist zu Gewährleistung des CPI von 1 erforderlich)
- Jump-Befehle mit (verkürzter) absoluter Adressierung werden in einem Takt ausgeführt, bedingte Branch-Befehle mit relativer Adressierung werden zunächst nicht ausgeführt, Rückwärtssprünge werden in einem sogenannten Branch-Target-Buffer gespeichert und anschließend als auszuführen vorhergesagt.

Der interne Aufbau der beiden Modelle weist folgende Gemeinsamkeiten auf:
- Das Registerfile umfaßt 16 (General-Purpose-)Register mit je 16 Bit. Diese Register sind auch zur registerindirekten Adressierung von externem Speicher geeignet.
- Die Speicherung von Programmkonstanten (eingangsseitig) erfolgt innerhalb der Strukturinformationen. Es sind vier Speicherplätze ä 16 Bit vorgesehen.
- Die arithmetischen Verknüpfungen sind wie folgt auf arithmetische Einheiten AU0 bis AU3 aufgeteilt: AU0: Addierer/ Subtrahierer, AU1: Compare (Vergleicher mit Setzen eines Flags), AU2: Inkrement/Dekrement, AU3: Einer/Zweierkomplement.
- Die logischen Verknüpfungen sind wie folgt auf arithmetische Einheiten AU4 bis AU6 aufgeteilt: AU4: logisches UND, AUS: logisches ODER, AU6: logisches Exklusiv-ODER.
- Für Schiebe- und Rotationsoperationen, genauer gesagt für arithmetische Shifts rechts, logische Shifts rechts/links, und Rotation rechts/links ist eine arithmetische Einheit AU7 vorgesehen.
- Für die Konfigurierung der rALU werden benötigt:
   - je 10 Bit für die Ansteuerung der den 8 arithmetischen Einheiten vorgeschalteten 8 Multiplexer des ersten Typs,
   - je 5 Bit für die Ansteuerung der insgesamt 16 Multiplexer des zweiten Typs (pro Register des Register File REGFILE muß ein Multiplexer des zweiten Typs vorgesehen werden, und
   - 6 Bits für die Konfigurierung der arithmetischen Einheiten mit Mehrfachfunktionalität,
   so daß das diese Konfigurationsbits enthaltende Structure-Information-Feld des FLAB - zusammen mit den 64 Bits für die Programmkonstantenspeicherung - insgesamt 230 Bits lang ist.
- Das Memory-Access-Feld MA des FLAB ist 16 Bits lang.
- Das Control-Flow-Feld CF des FLAB ist 24 Bits lang (vollständige PC-Adresse).

Das Modell RR2 unterscheidet sich vom Modell RR1 in folgenden Punkten:
- In der rALU ist eine zusätzliche arithmetische Einheit AU8 vorgesehen, welche für die Vergleiche EQ (gleich), NE (ungleich), GT (größer), GE (größer/gleich), LE (kleiner/ gleich), LT (kleiner), TRUE (wahr) oder FALSE (falsch) konfigurierbar ist. Das Ausgangssignal wird als ein Predicatebit pl verwendet, welches auf alle anderen arithmetischen Einheiten AU0 bis AU7 wirken kann (pro AU konfigurierbar). Ist p1 gesetzt, wird die Operation durchgeführt, ist pl gelöscht, wird der erste Operand ohne Veränderung am Ausgang durchgelassen.
- In der rALU ist ein zusätzlicher dynamischer Pfadmultiplexer AU9 für bedingte Kopier-Befehle integriert. AU9 wählt den oberen Operanden bei p1 = 1, den unteren bei p1 = 0 aus.

Für RR2 werden nur einige Konfigurationsbits mehr als für RR1 benötigt. Es sollte jedoch nicht übersehen werden, daß die Ausnutzbarkeit der zusätzlichen rALU-Bestandteile in RR2 in starkem Maß von verfügbarer Compilertechnologie (oder angepaßter Assemblerprogrammierung) abhängig ist.

Die Beispielprogramme werden auf den Modellen RR1 und RR2 jeweils unter verschiedenen Bedingungen ausgeführt, nämlich
- wie in einem herkömmlichen RISC-Prozessor, also ohne parallele Ausführung von Befehlen (-> RISC)
- unter paralleler Ausführung von Befehlen, wobei
   - ein arithmetisch-logischer Befehl oder ein Kopier-Befehl
   - ein Speicherzugriffs-Befehl, und
   - ein Kontrollfluß-Befehl
   parallel ausführbar sind (-> rRISC-Level 1)
- unter paralleler Ausführung von Befehlen, wobei
   - ein arithmetisch-logischer Befehl
   - mehrere Kopier-Befehle
   - ein Speicherzugriffs-Befehl, und
   - ein Kontrollfluß-Befehl
   parallel ausführbar sind (-> rRISC-Level 2)
- unter paralleler Ausführung von Befehlen, wobei
   - mehrere arithmetisch-logische Befehle
   - mehrere Kopier-Befehle
   - ein Speicherzugriffs-Befehl, und
   - ein Kontrollfluß-Befehl
   parallel ausführbar sind (-> rRISC-Level 3).

Die Ergebnisse der Beispielprogramm-Ausführungen beruhen teilweise auf Simulationen.

Ein erstes Beispielprogramm, anhand dessen die Leistungsfähigkeit der Modelle RR1 und RR2 demonstriert werden soll, berechnet die gerade Parität eines Bytes; diese ist auf '0' gesetzt, falls eine gerade Anzahl von Bits im Byte auf '1' gesetzt ist, bzw. auf '1' gesetzt, falls die Anzahl ungerade ist.

Der C-Sourcecode dieses Programmes lautet:

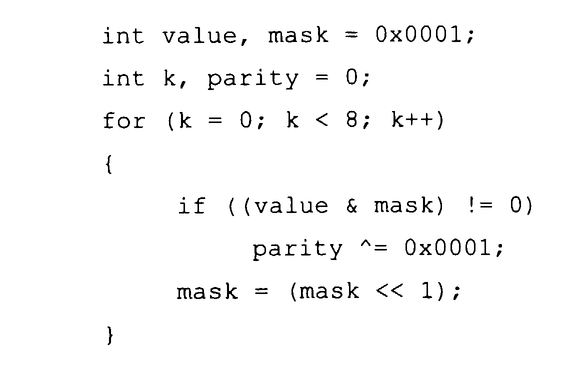

Die Übersetzung dieses Programmes in einen zur Ausführung auf dem Modell RR1 geeigneten Assemblercode führt zu folgendem Ergebnis (angegeben sind die Nummer des Befehls, der Befehl selbst, dessen Beschreibung, und die Anzahl der Takte, die zur Ausführung des betreffenden Befehls benötigt wird):

| | | | |
|---|---|---|---|
| 1 | | load R1,value ; Wert für Paritätsberechnung | (1) |
| 2 | | move R2,#0 ; Zählindex k | (1) |
| 3 | | move R3,#1 ; mask | (1) |
| 4 | | move R4,#0 ; parity | (1) |
| 5 | LOOP | and R5,R1,R3 | (1) |
| 6 | | bne LOOP2 | (1/2) |
| 7 | | eor R4,R4,#1 | (1) |
| 8 | LOOP2 | asl R3,R3,#1 ; Links-Shift um 1 | (1) |
| 9 | | inc R2 ; Schleifenzähler | (1) |
| 10 | | cmp R2,#8 ; Endevergleich | (1) |
| 11 | | blt LOOP | (1/2) |
| 12 | | store parity,R4; Resultatsspeicherung | (1) |

Die horizontalen Linien zeigen an, wo die vorstehend bereits erwähnten Basisblöcke (Befehlsfolgen mit nur einem Austrittspunkt) beginnen und enden. Im betrachteten Beispielprogramm sind insgesamt vier Basisblöcke vorhanden, nämlich ein die Befehle 1 bis 4 umfassender erster Basisblock, ein die Befehle 5 und 6 umfassender zweiter Basisblock, ein die Befehle 7 bis 11 oder 8 bis 11 umfassender dritter Basisblock, und ein den Befehl 12 umfassender vierter Basisblock. Der dritte Basisblock hat verschiedene Anfangspunkte. Wo er wirklich beginnt, hängt vom tatsächlichen Programmablauf ab: bei Nicht-Ausführung des bedingten Sprunges in Befehl 6 beginnt er bei Befehl 7, bei Ausführung des bedingten Sprunges bei Befehl 8.

Die Ausführung dieses Programms auf dem Modell RR1 unter den vorstehend genannten Bedingungen führt zu folgenden Ergebnissen:

| | | minimal | maximal |
|---|---|---|---|
| Anzahl der auszuführenden Befehle | | 53 | 61 |
| RISC | benötigte Takte | 63 | 63 |
| | CPI | 1,19 | 1,03 |
| rRISC-Level 1 | benötigte Takte | 43 | 48 |
| | CPI | 0,81 | 0,79 |
| rRISC-Level 2 | benötigte Takte | 45 | 49 |
| | CPI | 0,85 | 0,80 |
| rRISC-Level 3 | benötigte Takte | 38 | 37 |
| | CPI | 0,72 | 0,61 |

Die Assemblierung des ersten Beispielprogramms für die Modellarchitektur RR2 ergibt folgenden Code:

| | | | |
|---|---|---|---|
| 1 | | load R1,value ; Wert für Paritätsberechnung | (1) |
| 2 | | move R2,#0 ; Zählindex k | (1) |
| 3 | | move R3,#1 ; mask | (1) |
| 4 | | move R4,#0 ; parity | (1) |
| 5 | LOOP | and R5,R1,R3 | (1) |
| 6 | | pne R5,#0,p1 ; p1-Flag setzen/rücksetzen | (1) |
| 7 | | eorp R4,R4,#1(pl); p1 = 0: Kopie R4 in R4 | (1) |
| 8 | | asl R3,R3,#1 ; Links-Shift um 1 | (1) |
| 9 | | inc R2 ; Schleifenzähler | (1) |
| 10 | | cmp R2,#8 ; Endevergleich | (1) |
| 11 | | blt LOOP | (1/2) |
| 12 | | store parity,R4 ;Resultatsspeicherung, | (1) |

Die Ausführung dieses Programms auf dem Modell RR2 unter den vorstehend genannten Bedingungen führt zu folgenden Ergebnissen:

| | | |
|---|---|---|
| Anzahl der auszuführenden Befehle | | 61 |
| RISC | benötigte Takte | 63 |
| | CPI | 1,03 |
| rRISC-Level 1 | benötigte Takte | 57 |
| | CPI | 0,93 |
| rRISC-Level 2 | benötigte Takte | 57 |
| | CPI | 0,93 |
| rRISC-Level 3 | benötigte Takte | 43 |
| | CPI | 0,70 |

Das nachfolgend betrachtete zweite Beispielprogramm beinhaltet den Algorithmus für eine 16 ∗ 16 Bit Integer-Multiplikation, ausgeführt durch einen sequentiell arbeitenden Algorithmus: Diese Funktion ist notwendig, da in RR1 und RR2 keine Multiplikationseinheiten vorgesehen sind.

Der zur Ausführung auf dem Modell RR1 geeignete AssemblerCode lautet:

| | | | |
|---|---|---|---|
| 1 | | load R3,a ; Multiplikand | (1) |
| 2 | | load R5,b ; Multiplikator | (1) |
| 3 | | move R1,#0 ; Ergebnisregister, 2 ∗ 16 Bit | (1) |
| 4 | | move R2,#0 ; | (1) |
| 5 | | move R4,#0 ; Erweiterung R3 für Shift | (1) |
| 6 | | move R6,#1 ; Maskierungswert | (1) |
| 7 | Mul | and R7,R5,R6 ; R7: Hilfsregister | (1) |
| 8 | | beq Mu12 | (1/2) |
| 9 | | add R1,R3,R1 ; 32-bit Addition | (1) |
| 10 | | add R2,R4,R2 | (1) |
| 11 | Mul2 | asl R6,R6,#1 ; Maske shiften | (1) |
| 12 | | asl R3,R3,#1 ; 32-Bit-Shift | (1) |
| 13 | | rol R4,R4,#1 ; Ergebnis | (1) |
| 14 | | bcc Mul ; Ende nach 16 Shifts | (1/2) |

Die Ausführung dieses Programms auf dem Modell RR1 unter den vorstehend genannten Bedingungen führt zu folgenden Ergebnissen:

| | | minimal | maximal |
|---|---|---|---|
| Anzahl der auszuführenden Befehle | | 102 | 134 |
| RISC | benötigte Takte | 120 | 136 |
| | CPI | 1,18 | 1,01 |
| rRISC-Level 1 | benötigte Takte | 76 | 107 |
| | CPI | 0,75 | 0,80 |
| rRISC-Level 2 | benötigte Takte | 78 | 108 |
| | CPI | 0,76 | 0,81 |
| rRISC-Level 3 | benötigte Takte | 78 | 92 |
| | CPI | 0,76 | 0,69 |

Der zur Ausführung auf dem Modell RR2 geeignete AssemblerCode für das zweite Beispielsprogramm lautet:

| | | | |
|---|---|---|---|
| 1 | | load R3,a ; Multiplikand | (1) |
| 2 | | load R5,b ; Multiplikator | (1) |
| 3 | | move R1,#0 ; Ergebnisregister, 2*16 Bit | (1) |
| 4 | | move R2,#0 | (1) |
| 5 | | move R4,#0 ; Erweiterung R3 für Shift | (1) |
| 6 | | move R6,#1 ; Maskierungswert | (1) |
| 7 | Mul | and R7,R5,R6 ; R7: Hilfsregister | (1) |
| 8 | | peq R7,#0,p1 ; | (1) |
| 9 | | addp R1,R3,R1 (/p1) ; 32-Bit-Addition | (1) |
| 10 | | addp R2,R4,R2 (/pl) ; | (1) |
| 11 | | asl R6,R6,#1 ; Maske shiften | (1) |
| 12 | | asl R3,R3,#1 ; 32-Bit-Shift | (1) |
| 13 | | rol R4,R4,#1 ; Ergebnis | (1) |
| 14 | | Bcc Mul ; Ende nach 16 Schleifen | (1/2) |

Die Ausführung dieses Programms auf dem Modell RR2 unter den vorstehend genannten Bedingungen führt zu folgenden Ergebnissen:

| | | |
|---|---|---|
| Anzahl der auszuführenden Befehle | | 134 |
| RISC | benötigte Takte | 136 |
| | CPI | 1,01 |
| rRISC-Level 1 | benötigte Takte | 122 |
| | CPI | 0,91 |
| rRISC-Level 2 | benötigte Takte | 122 |
| | CPI | 0,91 |
| rRISC-Level 3 | benötigte Takte | 107 |
| | CPI | 0,80 |

Das nachfolgend beschriebene dritte Beispielprogramm ist ein Ausschnitt aus einer Sortierroutine innerhalb eines Arrays.

Der C-Sourcecode lautet wie folgt:

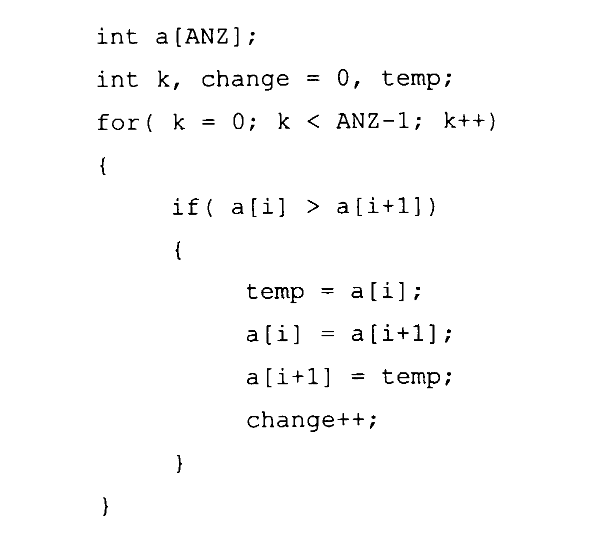

Die Übersetzung dieses Codes in Assembler ergibt:

| | | | |
|---|---|---|---|
| 1 | | move R1,(a) ; Grundadresse für Array a | (1) |
| 2 | | add R7,R1,#2 ; Adresse + 1 Element in R7 | (1) |
| 3 | | move R2,#ANZ-1 ; Ende für Zählung | (1) |
| 4 | | move R3,#0 ; Zählindex k | (1) |
| 5 | | move R4,#0 ; change | (1) |
| 6 | | load R5,(R1) ; a[0] in R5 laden | (1) |
| 7 | LOOP | load R6,(R7) ; a[i+1] laden | (1) |
| 8 | | cmp R5,R6 ; Vergleich a[i] > a[i+1] | (1) |
| 9 | | ble LOOP2 ; Sprung: Kein Tausch | (1/2) |
| 10 | | store (R1),R6 ; Arrayelemente tauschen | (1) |
| 11 | | store (R7),R5 | (1) |
| 12 | | inc R4 ; change++ | (1) |
| 13 | | bra LOOP3 ; unbedingter Sprung | (1/2) |
| 14 | LOOP2 | move R5,R6 ; Kopie wegen Indexerhoehung | (1) |
| 15 | LOOP3 | inc R3 ; Schleifenindex | (1) |
| 16 | | add R7,R7,#2 ; nächstes Element | (1) |
| 17 | | cmp R3,R2 ; Endevergleich | (1) |
| 18 | | blt LOOP | (1/2) |

Die Ausführung dieses Programms auf dem Modellen RR1 und RR2 (bei diesem Beispiel existiert mangels Verwendbarkeit von Predicate-Befehlen kein Unterschied) führt unter den vorstehend genannten Bedingungen führt bei 16 Array-Elementen zu folgenden Ergebnissen:

| | | minimal | maximal |
|---|---|---|---|
| Anzahl der auszuführenden Befehle | | 134 | 182 |
| RISC | benötigte Takte | 151 | 199 |
| | CPI | 1,13 | 1,09 |
| rRISC-Level 1 | benötigte Takte | 106 | 126 |
| | CPI | 0,79 | 0,69 |
| rRISC-Level 2 | benötigte Takte | 91 | 126 |
| | CPI | 0,68 | 0,69 |
| rRISC-Level 3 | benötigte Takte | 76 | 111 |
| | CPI | 0,57 | 0,61 |

Das nachfolgend beschriebene vierte Beispielprogramm beinhaltet einen Algorithmus zur Berechnung des Floating Average, d.h. eines Mittelwertes aus k aufeinanderfolgenden Variablen eines eindimensionalen Arrays, wobei die Schrittweite der Schleife, bezogen auf das erste Element nicht k, sondern 1 beträgt: Durch diesen Algorithmus wird beispielsweise eine Glättung vollzogen.

Für k = 4 lautet der zugehörige C-Sourcecode wie folgt:

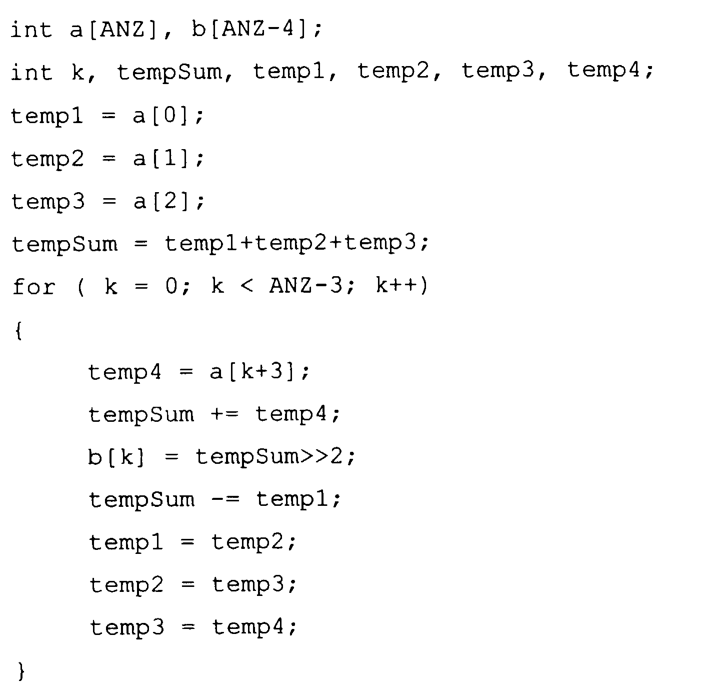

Die Übersetzung dieses Codes in Assembler führt zu folgendem Ergebnis:

| | | | |
|---|---|---|---|
| 1 | | move R1, (a) ; Grundadresse für Array a | (1) |
| 2 | | move R2, (b) ; Grundadresse für Array b | (1) |
| 3 | | load R4,(R1) ; a[0] in templ | (1) |
| 4 | | add R1,R1,#2 ; &a[1] | (1) |
| 5 | | load R5, (R1) ; a[11 in temp2 | (1) |
| 6 | | add R1,R1,#2 ; &a[2] | (1) |
| 7 | | load R6,(R2) ; a[2] in temp3 | (1) |
| 8 | | add R3,R4,R5 ; tempSum = a[0]+a[1]+a[2] | (1) |
| 9 | | add R3,R3,R6 | (1) |
| 10 | | add R1,R1,#2 ; &a[3] | (1) |
| 11 | | move R8,#0 ; Zählindex k | (1) |
| 12 | LOOP | load R7,(R1) ; a[k+3] laden | (1) |
| 13 | | add R3,R3,R7 ; tempSum + a[k+3] | (1) |
| 14 | | asr R9,R3,#2 ; »2 | (1) |
| 15 | | store (R2),R9 ; speichern in b[k] | (1) |
| 16 | | sub R3,R3,R4 ; tempSum - a[k] | (1) |
| 17 | | move R4,R5 ; Wechseln der Variablen | (1) |
| 18 | | move R5,R6 | (1) |
| 19 | | move R6,R7 | (1) |
| 20 | | inc R8 ; Indexkorrektur | (1) |
| 21 | | add R1,R1,#2 ; Adressenkorrektur | (1) |
| 22 | | add R2,R2,#2 ; für a und b | (1) |
| 23 | | cmp R8,#ANZ-3 | (1) |
| 24 | | blt LOOP | (1/2) |

Die Ausführung dieses Programms auf den Modellen RR1 und RR2 (bei diesem Beispiel existiert mangels Verwendbarkeit von Predicate-Befehlen kein Unterschied) unter den vorstehend genannten Bedingungen führt bei 13 Array-Elementen und 10 Schleifendurchläufen zu folgenden Ergebnissen:

| | | |
|---|---|---|
| Anzahl der auszuführenden Befehle | | 180 |
| RISC : | benötigte Takte | 182 |
| | CPI | 1,01 |
| rRISC-Level 1: | benötigte Takte | 166 |
| | CPI | 0,92 |
| rRISC-Level 2: | benötigte Takte | 139 |
| | CPI | 0,77 |
| rRISC-Level 3: | benötigte Takte | 112 |
| | CPI | 0,62 |

Das letzte Beispielprogramm ist eine typische Initialisierungsroutine für ein array. Hier wird ein eindimensionales Datenfeld, gegeben durch den Pointer auf die erste Adresse mit einem vorgegebenen Wert aus einer Variablen vorbesetzt, wie es beispielsweise für Strings erfolgen kann.

Der C-Sourcecode für dieses Programm lautet wie folgt:

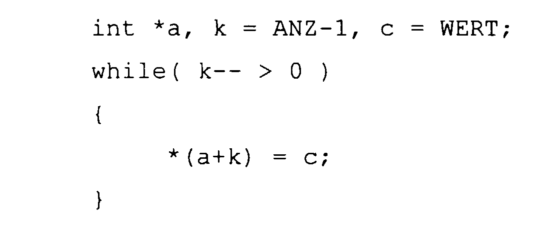

Eine Übersetzung dieses Programms in Assembler für RR1 und RR2 führt zu folgendem Ergebnis:

| | | | |
|---|---|---|---|
| 1 | | load R3,a ; Adresse des Arrays | (1) |
| 2 | | load R2,ANZ-1 ; Indexzähler | (1) |
| 3 | | load R1,c ; Wert der Variablen c | (1) |
| 4 | | asl R4,R2,#1 ; Indexanpassung (^{∗}2) | (1) |
| 5 | | add R4,R4,R3 ; Adresse *(a+k) | (1) |
| 6 | LOOP | store (R4),R1 | (1) |
| 7 | | sub R4,R4,#2 ; Adressanpassung | (1) |
| 8 | | dec R2 ; Indexanpassung | (1) |
| 9 | | bne LOOP ; | (1/2) |

Die Ausführung dieses Programms auf den Modellen RR1 und RR2 unter den vorstehend genannten Bedingungen führt bei 48 Array-Elementen zu folgenden Ergebnissen:

| | | |
|---|---|---|
| Anzahl der auszuführenden Befehle | | 197 |
| RISC | benötigte Takte | 199 |
| | CPI | 1,01 |
| rRISC-Level 1 | benötigte Takte | 106 |
| | CPI | 0,53 |
| rRISC-Level 2 | benötigte Takte | 106 |
| | CPI | 0,53 |
| rRISC-Level 3 | benötigte Takte | 59 |
| | CPI | 0,30 |

Wie aus den vorstehenden Beispielen ersichtlich ist, lassen sich die Beispielprogramme - abgesehen von bei bestimmten Sonderfällen auftretenden Ausnahmen - um so schneller ausführen, je mehr parallele Befehle parallel abgearbeitet werden können (je höher der rRISC-Level ist).

Im Durchschnitt ergibt sich für die Ausführung aller Beispielprogramme auf den Modellen RR1 und RR2 folgendes Gesamtergebnis:

| | | RR1 | RR2 |
|---|---|---|---|
| Anzahl der auszuführenden Befehle | | 710 | 730 |
| RISC | benötigte Takte | 747 | 755 |
| | CPI | 1,05 | 1,03 |
| rRISC-Level 1 | benötigte Takte | 525 | 567 |
| | CPI | 0,74 | 0,78 |
| rRISC-Level 2 | benötigte Takte | 494 | 533 |
| | CPI | 0,70 | 0,73 |
| rRISC-Level 3 | benötigte Takte | 388 | 415 |
| | CPI | 0,55 | 0,57 |

Abschließend wird nun noch der Algorithmus zur Generierung der FLAB-Zeilen-Einträge beschrieben. Die Verwendung des FLAB erweist sich unabhängig vom realisierbaren oder zu realisierenden rRISC-Level als Vorteil.

Bei der Generierung der FLAB-Zeilen-Einträge muß unterschieden werden, ob "nur" der rRISC-Level 1 oder rRISC-Level 2 oder 3 realisiert werden sollen.

Diese Unterscheidung ist notwendig, weil bei rRISC-Level 1 "nur" auf bereits getrennt vorhandene Hardwareeinheiten zurückgegriffen werden muß, wohingegen bei rRISC-Level 2 und insbesondere bei rRISC-Level 3 zumindest teilweise eine ALU nach Art der neu konzipierten rALU zum Einsatz gebracht werden muß.

Für rRISC-Level 1 umfaßt die Umsetzung von Befehlsfolgen in in FLAB-Zeilen speicherbare Makroinstruktionen folgende Schritte:
- Klassifizierung der Befehle. Im betrachteten Beispiel werden vier Befehlsklassen unterschieden, nämlich Kontrollfluß-Befehle, Speicherzugriffs-Befehle, arithmetisch/ logische Befehle einschließlich der Kopier-Befehle, und sonstige Befehle, welche - im Gegensatz zu den Befehlen der erstgenannten Befehlsklassen - nicht in den FLAB integrierbar sind. Für jede der in den FLAB integrierbaren Befehlsklassen wird ein (anfangs unbelegter) Speicherbereich im FLAB zur Verfügung gestellt.
- Eintragung von in den FLAB einzutragenden Informationen in einen temporären Speicher, der nicht Bestandteil des FLAB ist, sondern der Zusammenstellung der in den FLAB einzutragenden Informationen dient. Beim Eintragen des ersten Befehls wird dessen Speicheradresse als die in das Start-Address-Feld des FLAB einzutragende Startadresse verwendet; bei den anderen Befehlen wird der Adreßzähler hochgezählt bzw. die momentane Adresse als Endadresse verwendet, welche in das Length-Feld des FLAB eingetragen wird oder basierend auf welchem die dort einzutragende Länge der zu einem FLAB-Zeileneintrag zusammengefaßten Befehlsfolge berechnet wird.
- Bei Auftreten eines integrierbaren Kontrollfluß-Befehls wie z.B. Branch, Jump etc. wird - falls für das Control-Flow-Feld noch kein Eintrag existiert - der betreffende Kontrollfluß-Befehl sowie die angenommene Sprungrichtung und das Sprungziel eingetragen. Die Sprungbedingung (Flagabhängigkeit) ergibt sich bei bedingten Sprungbefehlen aus dem Befehlscode, sie kann aber auch explizit eingetragen werden. Die Eintragung der Sprungrichtung mit Sprungziel erfolgt gegebenenfalls einen Takt später (wenn diese unter Verwendung der Look-Ahead-Resolution ermittelt wurden).
- Beim Auftreten eines Speicherzugriffs-Befehls wie Load, Store, Push, Pop wird dieser in das Memory-Access-Feld des FLAB eingetragen; Operanden liegen als Register- oder Speicheradressen vor und werden auch so eingetragen. Die Eintragung erfolgt nicht, wenn dieses Feld bereits besetzt ist, und sie erfolgt ggf. mit einer Zusatzinformation für Wartezyklen, falls solche aufgrund von detektierten Datenabhängigkeiten vorzusehen sind. Als Datenabhängigkeiten sind alle RAW-Abhängigkeiten (Read-After-Write) zu werten. Eine RAW-Abhängigkeit kann beispielsweise vorliegen, wenn ein als Quelle genutztes Register von einem parallel ausgeführten Befehl als Ziel genutzt wird. Die einfachste Methode zur Absicherung gegenüber diesen Datenabhängigkeiten bzw. zur Vermeidung falscher Resultate besteht darin, daß in den FLAB-Zeilen keine Befehle zusammengefaßt werden, die RAW-Abhängigkeiten aufweisen oder aufweisen können (daß bei Auftreten eines Befehls, dessen Integration in die aktuelle FLAB-Zeile eine Datenabhängigkeit zur Folge hätte oder haben könnte, die Generierung der aktuellen FLAB-Zeile beendet und mit der Generierung der nächsten FLAB-Zeile begonnen wird).
- Beim Auftreten eines arithmetisch/logischen Befehls oder eines Kopier-Befehls wird dieser (vorzugsweise nach vorheriger Umsetzung in eine Strukturinformation) in das Structure-Information-Feld des FLAB eingetragen.

Die Generierung einer FLAB-Zeile (die Integration weiterer Befehle in diese) wird beendet, wenn entweder ein nicht integrierbarer Befehl auftritt oder wenn das Feld, in welches der betreffende Befehl einzutragen wäre, bereits besetzt ist. Die Generierung einer FLAB-Zeile kann auch enden, wenn eine RAW-Datenabhängigkeit auftritt, die - aus welchem Grund auch immer - nicht aufgelöst werden soll oder kann. Bei Beendigung der FLAB-Zeilen-Generierung werden die bis dahin nur temporär gespeicherten FLAB-Zeilen-Daten in eine FLAB-Zeile übertragen und mit der Generierung der nächsten FLAB-Zeile begonnen.

Für den rRISC-Level 1 ist es vorteilhaft, und für den rRISC-Level 2 und 3 - jedenfalls im vorliegend betrachteten Beispiel - zwingend erforderlich, die in einer FLAB-Zeile zusammenfaßbaren Befehle wenigstens teilweise in Strukturinformationen umzusetzen, unter Verwendung welcher die rALU so strukturierbar ist, daß die darin auszuführenden Befehle (die arithmetisch-logischen Befehle und die Kopier-Befehle) ausgeführt werden. Die Umsetzung von Befehlen in solche Strukturinformationen wird nachfolgend näher beschrieben. Dabei wird von einer RISC-Struktur ohne Mehrfachauslegung von zur Befehlsausführung benötigten Komponenten (beispielsweise des Addierers) ausgegangen; bei Mehrfachauslegung einzelner, mehrerer oder aller Komponenten, was grundsätzlich möglich ist, ist die Umsetzung entsprechend zu modifizieren.

Die in eine Strukturinformation umzusetzenden Befehle umfassen vorzugsweise nur unkonditionierte ("normale") Befehle, konditionierte (bedingte) Befehle und Predicate-Befehle (pxx-Befehle).

Die unkonditionierten (normalen) Befehle sind bedingungslos auszuführende arithmetisch/logische Befehle oder Kopier-Befehle. Das allgemeine Format dieser Befehle lautet: <Mnemonic> <Ziel-Register>, <Quellen-Register 1>, <Quellen-Register 2>. Zur Durchführung der durch einen solchen Befehl spezifizierten Operation wird normalerweise eine arithmetische Einheit der rALU benötigt.

Die konditionierten Befehle sind Befehle zur Bearbeitung von Daten bei Vorliegen einer bestimmten Bedingung (Kondition). Die durch diese Befehle auszuführenden Aktionen entsprechen den durch die normalen Befehle ausführbaren Aktionen, wobei die Ausführung der betreffenden Aktionen jedoch von einer vorbestimmten Bedingung abhängt. Ist die Bedingung erfüllt, wird die durch den Befehl spezifizierte Aktion ausgeführt, anderenfalls wird nichts ausgeführt (der betreffende Befehl wirkt dann wie ein NOP-Befehl). Das allgemeine Format dieser Befehle lautet: <Mnemonic>p <Ziel-Register>, <Quellen-Register 1>, <Quellen-Register 2> <p-Flag>, wobei durch das "p" am Ende des Mnemonic die Abhängigkeit der Befehlsausführung von einer Bedingung signalisiert wird, und wobei die Bedingung durch einen bestimmten Zustand eines bestimmten Flags (des "p-Flag") definiert wird. Zur Durchführung der durch einen solchen Befehl spezifizierten Operation wird normalerweise eine über einen Steueranschluß verfügende arithmetische Einheit der rALU benötigt, welche abhängig von einem (durch Predicate-Befehle setzbaren/rücksetzbaren und über den Steueranschluß eingegebenen) p-Flag arbeitet.

Die Predicate-Befehle (pxx-Befehle) sind Befehle zur Festlegung des Zustandes des in den bedingten Befehlen verwendeten Bedingungs-Flags (des p-Flags). Die Festlegung erfolgt dabei während des Programmablaufs basierend auf einem Vergleich von zwei Daten. Das allgemeine Format dieser Befehle lautet: pxx <Quellen-Register 1>, <Quellen-Register 2>, <p-Flag>, wobei xx die durchzuführende Vergleichsoperation spezifiziert und durch gt (größer als), ge (größer oder gleich), eq (gleich), ne (ungleich), le (kleiner oder gleich) oder lt (kleiner als) zu ersetzen ist. Die pxx-Befehle sind mit den üblichen Branch-Befehlen vergleichbar und dienen zum Ersatz derselben durch die Anwendung der sogenannten if-Konversion (siehe hierzu den vorstehend bereits erwähnten Aufsatz von Wen-Mei W. Hwu et al.).

Die Umsetzung eines Befehls in eine Strukturinformationen erfolgt im betrachteten Beispiel im wesentlichen in drei Phasen. Dabei ist zu berücksichtigen, daß die Strukturinformation einer FLAB-Zeile mehrere arithmetisch-logische Befehle und/oder Kopier-Befehle umfassen kann (daß mehrere arithmetisch-logische Befehle und/oder Kopier-Befehle in eine gemeinsame Strukturinformation umgesetzt werden können).

In der ersten Phase wird zunächst ermittelt, welche rALU-Komponente (Addierer, Subtrahierer, Multiplizierer ...) zur Ausführung des betreffenden Befehls benötigt wird, und ob diese rALU-Komponente noch verfügbar ist. Ist die betreffende rALU-Komponente frei, so wird anschließend die erforderliche Konfiguration derselben ermittelt und die betreffende rALU-Komponente als belegt markiert. Zur Konfiguration der betreffenden rALU-Komponente werden einfach die dazu vorgesehenen Bits innerhalb der zu erzeugenden Strukturinformation gesetzt oder zurückgesetzt. Die Reservierung der ausgewählten rALU-Komponente ist notwendig, um zu verhindern, daß diese gleichzeitig für mehrere Befehle verwendet werden kann.

In der zweiten Phase der Generierung der Strukturinformation werden die den ausgewählten rALU-Komponenten vor- und/oder nachgeschalteten Multiplexer konfiguriert, um die Daten-und/oder Signalquellen und die Daten- und/oder Signalziele entsprechend den Festlegungen in den umzusetzenden Befehlen einzustellen.

Als Daten- und/oder Signalziel verwendete Register werden als belegt markiert, da für in einer FLAB-Zeile zusammengefaßten Befehle eine Zweitbelegung unzulässig ist und verhindert werden muß.

Neben diesem (für alle Befehle gemeinsamen) Teil der zweiten Phase werden für einzelne Befehlstypen spezielle Maßnahmen ergriffen, die sich aus den jeweiligen Besonderheiten ergeben.

Unter anderem muß bei bedingten Befehlen die das Vorliegen der Bedingung überprüfende Vergleichs-Einheit ermittelt werden und deren Ausgangssignal über den zugehörigen Demultiplexer auf die die Operation ausführende arithmetische Einheit geschaltet werden. Ferner ist zu berücksichtigen, welcher Art die Bedingung ist.

Bei bedingten Kopier-Befehlen ist zusätzlich dafür Sorge zu tragen, daß der Inhalt des Zielregisters bei Nicht-Ausführung des Befehls nicht verändert wird.

Nach der zweiten Phase der rALU-Konfigurierung könnte diese beendet werden. Dies geschieht vorzugsweise jedoch erst nach der Ausführung der nachfolgend beschriebenen dritten Phase.

In dieser dritten Phase der rALU-Konfigurierung wird ein data forwarding innerhalb der rALU realisiert. Das data forwarding in der rALU ist jedoch nicht zu verwechseln mit dem data forwarding der RISC-Architektur, welches zusätzlich existiert.

Die soeben kurz in Worten beschriebene Umsetzung von Befehlen in Strukturinformationen ist im betrachteten Beispiel hardwaremäßig realisiert. Die Umsetzungs-Hardware ist im betrachteten Beispiel Bestandteil des FLAB (siehe Figur 3), kann aber auch anderswo (beispielsweise in der Instruktion-Fetch-Einheit IF) untergebracht sein.

Eine wie beschrieben aufgebaute und betriebene programmgesteuerte Einheit läßt sich unabhängig von den Einzelheiten der praktischen Realisierung mit geringem Aufwand entwerfen, herstellen und betreiben, und arbeitet erheblich schneller als herkömmliche programmgesteuerte Einheiten der betrachteten Art.

### Bezugszeichenliste

- IF: Instruction-Fetch-Teileinheit des Prozessors
- DL: Decode/Operand-Load-Teileinheit des Prozessors
- EX/MEM: Execute/Memory-Access-Teileinheit des Prozessors
- WB: Write-Back-Teileinheit des Prozessors
- LAR: Look-Ahead-Resolution-Teileinheit des Prozessors
- FLAB: Fetch Look-Ahead Buffer

- ALU: Arithmetisch-Logische Einheit
- I1, I2: Eingangsanschlüsse
- O, OSF: Ausgangsanschlüsse
- C, CSF: Steueranschlüsse

- AUn: arithmetische Einheiten
- CU: Vergleichs-Einheit
- MUXCn: Multiplexer eines ersten Typs
- MUXD: Multiplexer eines zweiten Typs
- DEMUX: Demultiplexer
- ZSn: Zwischenspeicher
- REGFILE: register file

- FA: First-Address-Feld einer FLAB-Zeile
- L: Length-Feld einer FLAB-Zeile
- IB: Indication-Bit-Feld einer FLAB-Zeile
- SI: Structure-Information-Feld einer FLAB-Zeile
- MA: Memory-Access-Feld einer FLAB-Zeile
- CF: Control-Flow-Feld einer FLAB-Zeile

## Patentansprüche

1. Programmgesteuerte Einheit, welche in einem Programm-und/oder Datenspeicher gespeicherte Befehle holt und sequentiell abarbeitet,
**dadurch gekennzeichnet,**
daß Befehle, die unterschiedlichen Befehlsgruppen angehören, in unterschiedlichen Komponenten der programmgesteuerten Einheit ausgeführt werden, und daß aufeinanderfolgende Befehle einer Befehlsfolge, die in unterschiedlichen Komponenten auszuführen sind, gleichzeitig ausgeführt werden.

2. Programmgesteuerte Einheit, welche in einem Programm-und/oder Datenspeicher gespeicherte Befehle holt und sequentiell abarbeitet,
**dadurch gekennzeichnet,**
daß die programmgesteuerte Einheit die aus dem Programm-und/oder Datenspeicher gelesenen Befehle neben der sequentiellen Abarbeitung derselben in mehrere Befehle umfassende Makrobefehle umsetzt und intern speichert.

3. Programmgesteuerte Einheit nach Anspruch 2,
**dadurch gekennzeichnet,**
daß die in einen Makrobefehl umgesetzte Befehle jeweils solche Befehle sind, die durch die programmgesteuerte Einheit gleichzeitig ausgeführt werden können.

4. Programmgesteuerte Einheit nach Anspruch 2 oder 3,
**dadurch gekennzeichnet,**
daß die in einen Makrobefehl umgesetzte Befehle jeweils solche Befehle sind, die in unterschiedlichen Komponenten der programmgesteuerten Einheit auszuführen sind.

5. Programmgesteuerte Einheit nach einem der vorhergehenden Ansprüche,
**dadurch gekennzeichnet,**
daß die von der programmgesteuerten Einheit auszuführenden Befehle zumindest teilweise in einem strukturierbaren Hardwareblock der programmgesteuerten Einheit ausgeführt werden, welcher so konfigurierbar ist, daß er die zur Ausführung der jeweiligen Befehle erforderlichen Operationen ausführt.

6. Programmgesteuerte Einheit nach Anspruch 5,
**dadurch gekennzeichnet,**
daß im strukturierbaren Hardwareblock auszuführende Befehle zumindest teilweise in eine Strukturinformation umgesetzt werden, unter Verwendung welcher der strukturierbare Hardwareblock für die Ausführung der betreffenden Befehle konfigurierbar ist.

7. Programmgesteuerte Einheit nach einem der vorhergehenden Ansprüche,
**dadurch gekennzeichnet,**
daß es sich bei dem strukturierbaren Hardwareblock um die arithmetisch-logische Einheit der programmgesteuerten Einheit handelt.

8. Programmgesteuerte Einheit nach einem der vorhergehenden Ansprüche,
**dadurch gekennzeichnet,**
daß ein Kontrollfluß-Befehl, ein Speicherzugriffs-Befehl, ein oder mehrere arithmetisch-logische Befehle, und/oder ein oder mehrere Kopier-Befehle gleichzeitig ausgeführt werden können.

9. Programmgesteuerte Einheit nach einem der vorhergehenden Ansprüche,
**dadurch gekennzeichnet,**
daß die programmgesteuerte Einheit eine arithmetisch-logische Einheit mit voneinander unabhängig betreibbaren arithmetisch-logischen Teileinheiten aufweist, wobei jede der Teileinheiten in der Lage ist, einen arithmetisch-logischen Befehl oder einen Kopierbefehl auszuführen.
